(19) Europäisches Patentamt
European Patent Office
Office européen des brevets

(11) **EP 4 325 594 A2**

(12) **EUROPEAN PATENT APPLICATION**

(43) Date of publication:
**21.02.2024 Bulletin 2024/08**

(21) Application number: **23182165.3**

(22) Date of filing: **28.06.2023**

(51) International Patent Classification (IPC):
**H01M 4/131** (2010.01)  **H01M 4/36** (2006.01)
**H01M 10/0525** (2010.01)  **H01M 10/0562** (2010.01)

(52) Cooperative Patent Classification (CPC):
**H01M 10/0562; H01M 4/131; H01M 4/362;**
**H01M 4/366; H01M 10/0525;** H01M 2300/0017;
H01M 2300/0068; H01M 2300/0094

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.07.2022 JP 2022119623**

(71) Applicants:
• **Toyota Jidosha Kabushiki Kaisha**
**Toyota-shi, Aichi-ken 471-8571 (JP)**
• **Panasonic Holdings Corporation**
**Osaka 571-8501 (JP)**

(72) Inventors:
• **YABE, Hiroki**
**Kadoma-shi, 571-0057 (JP)**
• **SASAKI, Izuru**
**Kadoma-shi, 571-0057 (JP)**
• **HASHIMOTO, Kazuya**
**Kadoma-shi, 571-0057 (JP)**
• **SUGIMOTO, Yuta**
**Kadoma-shi, 571-0057 (JP)**
• **NISHIO, Yusuke**
**Kadoma-shi, 571-0057 (JP)**

(74) Representative: **D Young & Co LLP**
**120 Holborn**
**London EC1N 2DY (GB)**

(54) **ELECTRODE MATERIAL, ELECTRODE, AND ALL-SOLID-STATE BATTERY**

(57)  An electrode material comprises a composite particle. The composite particle includes a core particle and a covering layer. The covering layer covers at least part of a surface of the core particle. The core particle includes an active material. The covering layer includes a first layer and a second layer. At least part of the first layer is interposed between the core particle and the second layer. The first layer includes a first solid electrolyte. The second layer includes a second solid electrolyte. The first solid electrolyte is a fluoride. The second solid electrolyte is a sulfide.

FIG.1

**Description**

CROSS REFERENCE TO RELATED APPLICATIONS

This nonprovisional application is based on Japanese Patent Application No. 2022-119623 filed on July 27, 2022, with the Japan Patent Office, the entire contents of which are hereby incorporated by reference.

BACKGROUND

Field

The present disclosure relates to an electrode material, an electrode, and an all-solid-state battery.

Description of the Background Art

Japanese Patent Laying-Open No. 2014-154407 discloses a composite active material, where the composite active material comprises a composite particle containing an oxide solid electrolyte covering an active material as well as a sulfide solid electrolyte covering the composite particle.

SUMMARY

Hereinafter, solid electrolyte may be abbreviated as "SE". For example, sulfide solid electrolyte may be abbreviated as "sulfide SE".

Sulfide SE has high ion-conductive properties and excellent formability. Sulfide SE is suitable for bulk-type all-solid-state batteries. However, when sulfide SE comes into direct contact with active material inside the electrode, degradation of sulfide SE may be facilitated. Degradation of sulfide SE can impair ion-conductive properties, for example.

In order to reduce direct contact between sulfide SE and active material, it is suggested to cover the active material with oxide SE to form composite particles. Further, in order to facilitate interface formation between the composite particles and sulfide SE, it is suggested to cover the composite particles with sulfide SE. Forming a composite of active material, oxide SE, and sulfide SE is expected to decrease initial resistance. However, there is room for improvement in post-endurance resistance increment.

An object of the present disclosure is to decrease post-endurance resistance increment.

Hereinafter, the technical configuration and effects of the present disclosure will be described. It should be noted that the action mechanism according to the present specification includes presumption. The action mechanism does not limit the technical scope of the present disclosure.

1. An electrode material comprises a composite particle. The composite particle includes a core particle and a covering layer. The covering layer covers at least part of a surface of the core particle. The core particle includes an active material. The covering layer includes a first layer and a second layer. At least part of the first layer is interposed between the core particle and the second layer. The first layer includes a first solid electrolyte. The second layer includes a second solid electrolyte. The first solid electrolyte is a fluoride. The second solid electrolyte is a sulfide.

Conventionally, oxide SE is present between active material and sulfide SE. Reaction resistance of oxide SE (such as $LiNbO_3$, for example) tends to increase during endurance.

In the electrode material according to "1" above, fluoride SE (first SE) is present between the active material (core particle) and the sulfide SE (second SE). According to a novel finding of the present disclosure, there is a tendency that reaction resistance of fluoride SE is less likely to increase as compared to oxide SE. With the reaction resistance of fluoride SE less likely to increase during endurance, resistance increment is expected to be decreased.

2. In the electrode material according to "1" above, the second layer may further include the first solid electrolyte in addition to the second solid electrolyte. In the second layer, a volume fraction of the second solid electrolyte is more than a volume fraction of the first solid electrolyte.

During formation of the first layer, part of the first SE (fluoride SE) may not be adhered to the core particle. Further, during formation of the second layer, the first SE adhered to the core particle may come off. As a result, a chip of the first SE may be produced. If the chip of the first SE, which is not trapped in the composite particle but instead present by itself, diffuses into the electrode material, electronic conduction and ionic conduction in the electrode can be inhibited. When the chip of the first SE is not diffused in the electrode material but instead trapped in the second layer, electronic conduction and ionic conduction in the electrode are expected to be facilitated.

3. In the electrode material according to "1" above or "2" above, the second layer may further include the active material in addition to the second solid electrolyte. In the second layer, a volume fraction of the second solid electrolyte is more than a volume fraction of the active material.

During formation of the first layer, the core particle (active material) may become chipped. As a result, a chip of the active material may be produced. The chip thus produced as a result of chipping of the core particle may also be called "chipping". Such a chip of the active material may also be produced during formation of the second layer. If the chip of the active material diffuses into the electrode material, electronic conduction and ionic conduction in the electrode can be inhibited. When the chip of the active material is not diffused in the electrode material but instead trapped in the second layer, electronic conduction and ionic conduction in the electrode are expected to be facilitated.

4. In the electrode material according to "1" above, the second layer may further include the first solid electrolyte and the active material in addition to the second solid electrolyte. In the second layer, a volume fraction of the second solid electrolyte is more than a total volume fraction of the first solid electrolyte and the active material.

The second layer may trap both the chip of the first SE and the chip of the active material in itself.

5. In the second layer according to "4" above, the first solid electrolyte may be adhered to the active material.

For example, when the core particle becomes chipped during formation of the second layer, a composite chip that includes the active material and the first SE may be produced.

6. In the electrode material according to any one of" 1" to "5" above, the first solid electrolyte may be, for example, from 1 to 10 parts by mass relative to 100 parts by mass of the active material. The second solid electrolyte may be, for example, from 0.1 to 20 parts by mass relative to 100 parts by mass of the active material.

7. In the electrode material according to any one of "1" to "6" above, the first solid electrolyte may be represented by the following formula (1):

$$Li_{6-nx}M_xF_6 \ldots \qquad (1)$$

where x satisfies $0<x<2$, M is at least one selected from the group consisting of semimetal atoms and metal atoms except Li, and n represents an oxidation number of M.

There is a tendency that the reaction resistance of the fluoride SE represented by the above formula (1) is less likely to increase during endurance.

8. In the electrode material according to "7" above, M in the above formula (1) may include an atom whose oxidation number is +4, for example.

9. In the electrode material according to "7" or "8" above, M in the above formula (1) may include an atom whose oxidation number is +3, for example.

10. In the electrode material according to any one of "7" to "9" above, M in the above formula (1) may include, for example, at least one selected from the group consisting of Ca, Mg, Al, Y, Ti, and Zr.

11. An electrode comprises the electrode material according to any one of "1" to "10" above.

12. An all-solid-state battery comprises the electrode according to "11" above.

The all-solid-state battery is expected to have low resistance increment at the time of endurance.

Next, an embodiment of the present disclosure (which may also be simply called "the present embodiment" hereinafter) and an example of the present disclosure (which may also be simply called "the present example" hereinafter) will be described. It should be noted that neither the present embodiment nor the present example limits the technical scope of the present disclosure. The present embodiment and the present example are illustrative in any respect. The present embodiment and the present example are non-restrictive. The technical scope of the present disclosure encompasses any modifications within the meaning and the scope equivalent to the terms of the claims. For example, it is originally planned that certain configurations of the present embodiment and the present example can be optionally combined.

The foregoing and other objects, features, aspects and advantages of the present disclosure will become more apparent from the following detailed description of the present disclosure when taken in conjunction with the accompanying drawings.

BRIEF DESCRIPTION OF THE DRAWINGS

Fig. 1 is a first conceptual view illustrating an example of a composite particle according to the present embodiment.

Fig. 2 is a second conceptual view illustrating an example of a composite particle according to the present embodiment.

Fig. 3 gives an example cross-sectional SEM image of a composite particle and example SEM-EDX elemental mapping images.

Fig. 4 is a schematic flowchart for a method of producing a composite particle according to the present embodiment.

Fig. 5 is a conceptual view of an all-solid-state battery according to the present embodiment.

DESCRIPTION OF THE PREFERRED EMBODIMENTS

<Terms and Definitions Thereof, etc.>

Expressions such as "comprise", "include", and "have", and other similar expressions (such as "be composed of", for example) are open-ended expressions. In an open-ended expression, in addition to an essential component, an additional component may or may not be further included. The expression "consist of" is a closed-end expression. However, even when a closed-end expression is used, impurities present under ordinary circumstances as well as an additional element irrelevant to the technique according to the present disclosure are not excluded. The expression "consist essentially of" is a semiclosed-end expression. A semiclosed-end expression tolerates addition of an element that does not substantially affect the fundamental, novel features of the technique according to the present disclosure.

Expressions such as "may" and "can" are not intended to mean "must" (obligation) but rather mean "there is a possibility" (tolerance).

A singular form also includes its plural meaning, unless otherwise specified. For example, "a particle" may mean not only "one particle" but also "a group of particles (powder, particles)".

A numerical range such as "from m to n%" includes both the upper limit and the lower limit. That is, "from m to n%" means a numerical range of "not less than m% and not more than n%". Moreover, "not less than m% and not more than n%" includes "more than m% and less than n%". Further, any numerical value selected from a certain numerical range may be used as a new upper limit or a new lower limit. For example, any numerical value from a certain numerical range may be combined with any numerical value described in another location of the present specification or in a table or a drawing to set a new numerical range.

All the numerical values are regarded as being modified by the term "about". The term "about" may mean $\pm 5\%$, $\pm 3\%$, $\pm 1\%$, and/or the like, for example. Each numerical value may be an approximate value that can vary depending on the implementation configuration of the technique according to the present disclosure. Each numerical value may be expressed in significant figures. Each measured value may be the average value obtained from multiple measurements performed. The number of measurements may be 3 or more, or may be 5 or more, or may be 10 or more. Generally, the greater the number of measurements is, the more reliable the average value is expected to be. Each measured value may be rounded off based on the number of the significant figures. Each measured value may include an error occurring due to an identification limit of the measurement apparatus, for example.

When a compound is represented by a stoichiometric composition formula (such as "$LiCoO_2$", for example), this stoichiometric composition formula is merely a typical example of the compound. The compound may have a non-stoichiometric composition. For example, when lithium cobalt oxide is represented as "$LiCoO_2$", the composition ratio of lithium cobalt oxide is not limited to "Li/Co/O = 1/1/2" but Li, Co, and O may be included in any composition ratio, unless otherwise specified. Further, doping with a trace element and/or substitution may also be tolerated.

"Semimetal" includes B, Si, Ge, As, Sb, and Te. "Metal" refers to an element belonging to Group 1 to Group 16 of the periodic table except "H, B, Si, Ge, As, Sb, Te, C, N, P, O, S, and Se". When an inorganic compound includes at least one of a semimetal and a metal as well as F, the semimetal and/or the metal may have a positive (+) oxidation number.

"Electrode" collectively refers to a positive electrode and a negative electrode. An electrode may be either a positive electrode or a negative electrode.

"Thickness" of a covering layer, a first layer, and a second layer may be measured by the procedure described below. A composite particle is embedded into a resin material to prepare a sample. With the use of an ion milling apparatus, a cross section of the sample is exposed. For example, "Arblade (registered trademark) 5000" (trade name) manufactured by Hitachi High-Technologies (or a similar product) may be used. The cross section of the sample is examined by an SEM (Scanning Electron Microscope). For example, "SU8030" (trade name) manufactured by Hitachi High-Technologies (or a similar product) may be used. For each of ten composite particles, the thickness of the part in question (the covering layer, the first layer, the second layer) is measured in twenty fields of view. The arithmetic mean of a total of 200 thickness measurements is regarded as the thickness of the part.

The thickness of each layer may be measured in an elemental mapping image captured by SEM-EDX (Energy Dispersive X-ray Spectrometry). In an elemental mapping image, an element is selected from each component, to represent the component. For example, Ni may be selected as a representative element for the core particle (active material); F may be selected as a representative element for the first layer (fluoride SE); and S may be selected as a representative element for the second layer (sulfide SE).

"Covering rate" is measured by the procedure described below. In the same manner as for the coating layer thickness measurement sample, a composite particle cross-sectional sample is prepared. In a cross-sectional SEM image, the length of the contour of the core particle (active material) is measured ($L_0$). The length of the portion of the contour of the core particle that is covered by at least one of fluoride SE and sulfide SE is measured ($L_1$). $L_1$ is divided by $L_0$, and the percentage of the resulting value is the covering rate. The covering rate is measured for each of twenty composite particles. The arithmetic mean of the twenty covering rates is regarded as "the covering rate".

For example, $L_0$ and $L_1$ may be calculated by image processing of an SEM-EDX elemental mapping image.

"Hollow particle" refers to a particle that has a central cavity whose area occupies 30% or more of the entire cross-sectional area of the particle in a cross-sectional image (such as a cross-sectional SEM image, for example) of the particle. "Solid particle" refers to a particle that has a central cavity whose area occupies less than 30% of the entire cross-sectional area of the particle in a cross-sectional image of the particle.

"D50" refers to a particle size in volume-based particle size distribution at which cumulative frequency of particle sizes accumulated from the small size side reaches 50%. D50 may be measured with a laser-diffraction particle size distribution analyzer.

"Average Feret diameter" is measured in a two-dimensional image of particles. The arithmetic mean of the maximum Feret diameters of twenty or more particles is "the average Feret diameter".

<Electrode Material>

An electrode material is a raw material of an electrode. The electrode material may be powder. For example, a coating material that includes the electrode material may be formed. The resulting coating material may be applied to the surface of a current collector to produce an electrode.

The electrode material comprises a composite particle. For example, the electrode material may further include a free component in addition to the composite particle. The free component is present free from the composite particle. The free component may be in particle form. For example, the free component may include an active material, a fluoride SE, a sulfide SE, and/or the like. For example, the free component may include chipping. For example, the free component may include a by-product of the production of the composite particle. For example, the free component may include a residue of the raw material of the composite particle. For example, part of the sulfide SE fed as a raw material of the composite particle may not contribute to forming the composite particle and rather become a free component. For example, the electrode material may consist of the free component in an amount from 0 to 10% in terms of mass fraction, with the remainder being made up of the composite particle. The mass fraction of the free component may be from 0 to 5% or from 1 to 3%, for example. The free component may have a maximum Feret diameter from 1 nm to 5 $\mu$m, for example.

<<Composite Particle>>

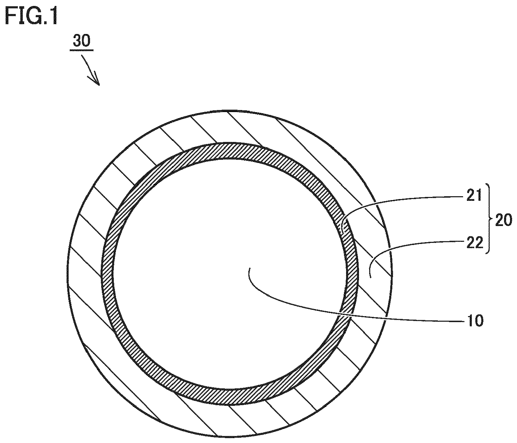

Fig. 1 is a first conceptual view illustrating an example of a composite particle according to the present embodiment.

A composite particle 30 includes a core particle 10 and a covering layer 20. Composite particle 30 has a D50 from 1 to 30 $\mu$m, or from 2 to 20 $\mu$m, or from 3 to 15 $\mu$m, or from 3 to 6 $\mu$m, or from 4 to 5 $\mu$m, for example. Composite particle 30 may have any shape. Composite particle 30 may be spherical, elliptical, flakes, fibrous, or the like, for example.

<<Covering Layer>>

Covering layer 20 covers at least part of the surface of core particle 10. For example, covering layer 20 may be formed in such a manner that it can even up the surface irregularities of core particle 10. Covering layer 20 may cover the entire surface of core particle 10. Covering layer 20 may cover part of the surface of core particle 10. Covering layer 20 may be distributed on the surface of core particle 10, in the form of islands. The covering rate may be from 50 to 100%, or from 60 to 100%, or from 70 to 100%, or from 80 to 100%, or from 90 to 100%, for example. The higher the covering rate is, the more decreased the initial resistance is expected to be, for example.

Covering layer 20 may have a thickness from 6 to 300 nm or from 11 to 150 nm, for example. The thinner the covering layer 20 is, the more decreased the initial resistance is expected to be, for example.

Covering layer 20 includes a first layer 21 and a second layer 22. At least part of first layer 21 is interposed between core particle 10 and second layer 22. For example, first layer 21 may directly cover the surface of core particle 10. For example, second layer 22 may cover the entire first layer 21. Second layer 22 may cover part of first layer 21. First layer 21 may be partially exposed from second layer 22. Second layer 22 may be partially in direct contact with core particle 10.

<First Layer, Fluoride SE>

First layer 21 is, in other words, "a lower layer". First layer 21 may completely cover the entire core particle 10, for example. First layer 21 may have a thickness from 1 to 100 nm or from 1 to 50 nm, for example. The thinner the first layer 21 is, the more decreased the initial resistance is expected to be, for example.

First layer 21 includes a first solid electrolyte (first SE). The first SE is a fluoride. There is a tendency that the reaction resistance of fluoride SE is less likely to increase during endurance.

The composition of the first SE is not particularly limited as long as it includes F. For example, the first SE may include Li and F. For example, the first SE may be represented by the following formula (1):

$$Li_{6-nx}M_xF_6 \ldots \qquad (1)$$

In the above formula (1), x satisfies $0<x<2$. M is at least one selected from the group consisting of semimetal atoms and metal atoms except Li. n represents an oxidation number of M.

M may consist of a single atom, or may consist of a plurality of types of atoms. When M consists of a plurality of types of atoms, n refers to the weighted average of the oxidation numbers of the atoms. For example, when M includes Ti (oxidation number = +4) and Al (oxidation number = +3) with the molar ratio between Ti and Al being "Ti/Al=3/7" and also x=1 is satisfied, the numerical expression "$n=0.3\times4+0.7\times3$" gives n=3.3.

x may satisfy $0.1\le x\le1.9$, $0.2\le x\le1.8$, $0.3\le x\le1.7$, $0.4\le x\le1.6$, $0.5\le x\le1.5$, $0.6\le x\le1.4$, $0.7\le x\le1.3$, $0.8\le x\le1.2$, or $0.9\le x\le1.1$, for example.

For example, M may include an atom whose oxidation number is +4. For example, M may include an atom whose oxidation number is +3. For example, M may include both an atom whose oxidation number is +4 and an atom whose oxidation number is +3.

For example, M may include at least one selected from the group consisting of Ca, Mg, Al, Y, Ti, and Zr. For example, M may include at least one selected from the group consisting of Al, Y, and Ti. For example, M may include at least one selected from the group consisting of Al and Ti.

For example, the first SE may be represented by the following formula (2):

$$Li_{3-x}Ti_xAl_{1-x}F_6 \ldots \qquad (2)$$

where x may satisfy $0\le x\le1$, $0.1\le x\le0.9$, $0.2\le x\le0.8$, $0.3\le x\le0.7$, or $0.4\le x\le0.6$, for example.

The first SE may be in particle form, for example. That is, first layer 21 may be a particle layer, for example. The particle layer is a group of particles. The average Feret diameter of the first SE may be from 0.1 to 1 fold the thickness of first layer 21, for example.

<Second Layer, Sulfide SE>

Second layer 22 is, in other words, "an upper layer". Second layer 22 may constitute the outermost layer of composite particle 30. Second layer 22 may surround core particle 10 without leaving any gap. Second layer 22 may be thicker than first layer 21, for example. Second layer 22 may have a thickness from 5 to 200 nm or from 10 to 100 nm, for example.

Second layer 22 includes a second solid electrolyte (second SE). The second SE is a sulfide. The sulfide SE may exhibit high ion-conductive properties. The composition of the second SE is not particularly limited as long as it includes S (sulfur). The second SE may include Li, P, and S, for example. The second SE may further include O, Ge, Si, and/or the like, for example. The second SE may further include a halogen and/or the like, for example. The second SE may further include I, Br, and/or the like, for example. The second SE may be of glass ceramic type or may be of argyrodite type, for example. The second SE may include, for example, at least one selected from the group consisting of LiI-LiBr-Li$_3$PS$_4$, Li$_2$S-SiS$_2$, LiI-Li$_2$S-SiS$_2$, LiI-Li$_2$S-P$_2$S$_5$, LiI-Li$_2$O-Li$_2$S-P$_2$S$_5$, LiI-Li$_2$S-P$_2$O$_5$, LiI-Li$_3$PO$_4$-P$_2$S$_5$, Li$_2$S-GeS$_2$-P$_2$S$_5$, Li$_2$S-P$_2$S$_5$, Li$_4$P$_2$S$_6$, Li$_7$P$_3$S$_{11}$, and Li$_3$PS$_4$.

For example, "LiI-LiBr-Li$_3$PS$_4$" refers to a sulfide SE produced by mixing LiI, LiBr, and Li$_3$PS$_4$ in any molar ratio. For example, the second SE may be produced by a mechanochemical method. "Li$_2$S-P$_2$S$_5$" includes Li$_3$PS$_4$. Li$_3$PS$_4$ may be produced by mixing Li$_2$S and P$_2$S$_5$ in "Li$_2$S/P$_2$S$_5$ = 75/25 (molar ratio)", for example.

The second SE may be in particle form, for example. That is, second layer 22 may be a particle layer, for example. The average Feret diameter of the second SE may be equal to or less than the thickness of second layer 22. The average Feret diameter of the second SE may be equal to, or less than, one third of the maximum Feret diameter of core particle 10. With the size of the second SE sufficiently smaller than the size of core particle 10, there is a tendency that the covering layer 20 is likely to even up the surface irregularities of core particle 10. As a result, the covering rate is expected to be enhanced, for example. The average Feret diameter of the second SE may be from 5 to 200 nm or from 10 to 100 nm, for example.

<Additional Component to Second Layer>

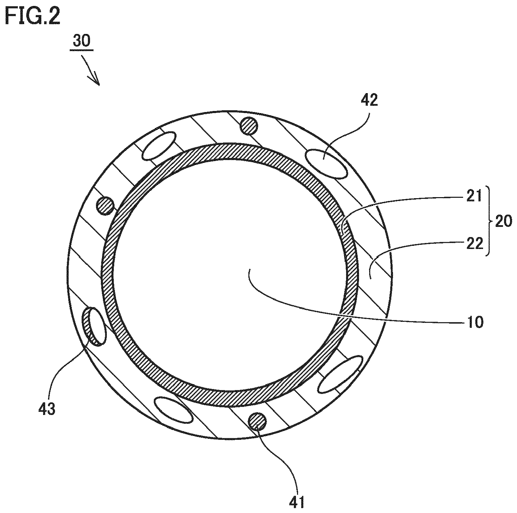

Fig. 2 is a second conceptual view illustrating an example of a composite particle according to the present embodiment.

Second layer 22 may further include a first chip 41 in addition to the second SE. First chip 41 includes the first SE. That is, second layer 22 may further include the first SE. In second layer 22, the volume fraction of the second SE is more than the volume fraction of the first SE. First chip 41 may be dispersed in second layer 22. First chip 41 may be produced by the first SE coming off from the first layer 21, for example. First chip 41 may be produced by part of the first SE not contributing to forming first layer 21, for example.

Second layer 22 may further include a second chip 42 in addition to the second SE. Second chip 42 includes an active material. That is, second layer 22 may further include an active material. In second layer 22, the volume fraction of the second SE is more than the volume fraction of the active material. Second chip 42 may be dispersed in second layer 22. Second chip 42 may be produced by chipping of core particle 10, for example.

Second layer 22 may further include a third chip 43 in addition to the second SE. Third chip 43 includes the first SE and an active material. That is, second layer 22 may further include both the first SE and an active material. In second layer 22, the first SE may be adhered to the active material. Third chip 43 may be produced by core particle 10 as well as first layer 21 becoming chipped during formation of second layer 22, for example.

Herein, first chip 41, second chip 42, and third chip 43 are collectively called "the chip". The chip may have any shape. The chip may be spherical, elliptical, flakes, fibrous, or the like, for example. The chip has a maximum Feret diameter of 1 nm or more, for example. The maximum Feret diameter of the chip is equal to or less than the thickness of second layer 22. A single composite particle 30 may include 1 to 100, 20 to 80, 30 to 70, or 30 to 50 chips, for example. The number of chips is measured for 10 or more composite particles 30. In a cross-sectional SEM image of composite particles 30, chips having a maximum Feret diameter of 1 nm or more are counted. The arithmetic mean for these 10 composite particles 30 is used.

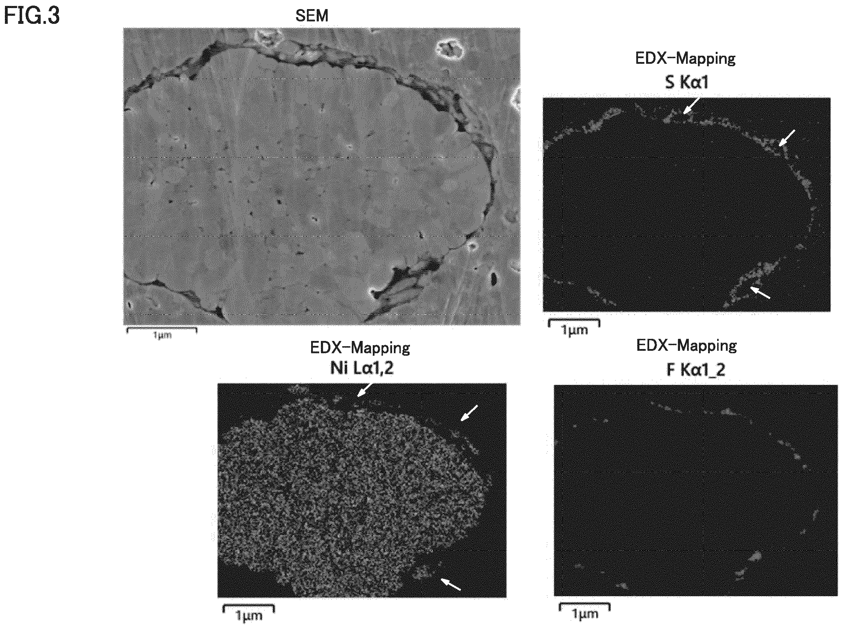

Fig. 3 gives an example cross-sectional SEM image of a composite particle and example SEM-EDX elemental mapping images. The elemental mapping image for S shows the distribution in the second layer (second SE). The elemental mapping image for F shows the distribution in the first layer (first SE). The elemental mapping image for Ni shows the distribution in the core particle (active material). For example, from the elemental mapping image for S and the elemental mapping image for Ni, it is understood that the second layer includes chips (chipping) of the active material. The composite particle in Fig. 3 consists of the first SE in an amount of 4.6% and the second SE in an amount of 10% in terms of volume fraction, with the remainder being made up of the active material. For example, the area fraction in the cross-sectional SEM image or in the elemental mapping image may be regarded as the volume fraction.

For example, the second layer may consist of the first chip in an amount from 0 to 10%, the second chip in an amount from 0 to 10%, and the third chip in an amount from 0 to 10% in terms of volume fraction, with the remainder being made up of the second SE. For example, the second layer may consist of the first chip in an amount from 1 to 5%, the second chip in an amount from 1 to 5%, and the third chip in an amount from 1 to 5% in terms of volume fraction, with the remainder being made up of the second SE. For example, the second layer may consist of the first chip in an amount from 1 to 3%, the second chip in an amount from 1 to 3%, and the third chip in an amount from 1 to 3% in terms of volume fraction, with the remainder being made up of the second SE.

<Amount to Be Used>

The amounts of the active material, the first SE, and the second SE to be used are not particularly limited. For example, the amount of the first SE may be from 1 to 10 parts by mass or from 2 to 3 parts by mass relative to 100 parts by mass of the active material. For example, the amount of the first SE may be from 1.3 to 8.8 parts by mass, or from 2.4 to 4.8 parts by mass, or from 3.8 to 4.8 parts by mass, relative to 100 parts by mass of the active material.

The amount of the second SE to be used may be less than the amount of the first SE to be used. The amount of the second SE to be used may be more than the amount of the first SE to be used. For example, the mass ratio between the first SE and the second SE ((first SE)/(second SE)) may be from 0.5 to 2. For example, the amount of the second SE may be from 0.1 to 20 parts by mass or from 0.5 to 15 parts by mass relative to 100 parts by mass of the active material.

Relative to 100 parts by mass of the active material, the sum of the amount of the first SE to be used and the amount of the second SE to be used may be from 2.7 to 11.5 parts by mass, or from 4 to 7.5 parts by mass, or from 5.1 to 7.5 parts by mass, or from 6.5 to 7.5 parts by mass, for example.

<<Core Particle>>

Core particle 10 is a base material of composite particle 30. Composite particle 30 may include a single core particle 10. Composite particle 30 may include a plurality of core particles 10. For example, core particle 10 may be a secondary particle. The secondary particle is a group of primary particles. For example, chipping may occur along the grain boundary of the primary particles. The secondary particle may have a D50 from 1 to 30 $\mu$m, or from 2 to 20 $\mu$m, or from 3 to 15 $\mu$m, or from 3 to 6 $\mu$m, or from 4 to 5 $\mu$m, for example. The primary particle may have an average Feret diameter from 0.01 to 3 $\mu$m, for example.

Core particle 10 may have any shape. Core particle 10 may be spherical, elliptical, flakes, fibrous, or the like, for example. Core particle 10 may be solid particles, or may be hollow particles.

Core particle 10 includes an active material. The active material may cause electrode reaction. Core particle 10 may include a positive electrode active material, for example. The positive electrode active material may include any component. The positive electrode active material may include, for example, at least one selected from the group consisting of $LiCoO_2$, $LiNiO_2$, $LiMnO_2$, $LiMn_2O_4$, $Li(NiCoMn)O_2$, $Li(NiCoAl)O_2$, $Li(NiCoMnAl)O_2$, and $LiFePO_4$. "(NiCoMn)" in "$Li(NiCoMn)O_2$", for example, means that the constituents within the parentheses are collectively regarded as a single unit in the entire composition ratio. As long as (NiCoMn) is collectively regarded as a single unit in the entire composition ratio, the amounts of individual constituents are not particularly limited. $Li(NiCoMn)O_2$ may include, for example, at least one selected from the group consisting of $LiNi_{1/3}Co_{1/3}Mn_{1/3}O_2$, $LiNi_{0.4}Co_{0.3}Mn_{0.3}O_2$, $LiNi_{0.5}Co_{0.2}Mn_{0.3}O_2$, $LiNi_{0.5}Co_{0.3}Mn_{0.2}O_2$, $LiNi_{0.5}Co_{0.4}Mn_{0.1}O_2$, $LiNi_{0.5}Co_{0.1}Mn_{0.4}O_2$, $LiNi_{0.6}Co_{0.2}Mn_{0.2}O_2$, $LiNi_{0.6}Co_{0.3}Mn_{0.1}O_2$, $LiNi_{0.6}Co_{0.1}Mn_{0.3}O_2$, $LiNi_{0.7}Co_{0.1}Mn_{0.2}O_2$, $LiNi_{0.7}Co_{0.2}Mn_{0.1}O_2$, $LiNi_{0.8}Co_{0.1}Mn_{0.1}O_2$, and $LiNi_{0.9}Co_{0.05}Mn_{0.05}O_2$. For example, $Li(NiCoAl)O_2$ may include $LiNi_{0.8}Co_{0.15}Al_{0.05}O_2$ and/or the like.

For example, the positive electrode active material may be represented by the following formula (3):

$$Li_{1-y}Ni_xM_{1-x}O_2 \,... \qquad (3)$$

$$0.5 \leq x \leq 1$$

$$-0.5 \leq y \leq 0.5$$

In the above formula (3), M may include at least one selected from the group consisting of Co, Mn, and Al, for example, x may be 0.6 or more, or may be 0.7 or more, or may be 0.8 or more, or may be 0.9 or more, for example.

The positive electrode active material may include an additive, for example. The additive may be a substituted solid solution atom or an intruding solid solution atom, for example. The additive may be an adherent adhered to the surface of the positive electrode active material (primary particle). The adherent may be an elementary substance, an oxide, a carbide, a nitride, a halide, and/or the like, for example. The amount to be added may be from 0.01 to 0.1, or from 0.02 to 0.08, or from 0.04 to 0.06, for example. The amount to be added refers to the ratio of the amount of substance of the additive to the amount of substance of the positive electrode active material. The additive may include, for example, at least one selected from the group consisting of B, C, N, halogens, Sc, Ti, V, Cu, Zn, Ga, Ge, Se, Sr, Y, Zr, Nb, Mo, In, Sn, W, and lanthanoids.

Core particle 10 may include a negative electrode active material, for example. The negative electrode active material may include any component. The negative electrode active material may include, for example, at least one selected from the group consisting of natural graphite, artificial graphite, soft carbon, hard carbon, Si, $SiO_x$ (0<x<2), Si-based alloy, Sn, $SnO_x$ (0<x<2), Li, Li-based alloy, and $Li_4Ti_5O_{12}$. $SiO_x$ (0<x<2) may be doped with Mg and/or the like, for example. By having an alloy-based active material (such as Si, for example) supported by a carbon-based active material (such as graphite, for example), a composite material may be formed.

<Method of Producing Composite Particle>

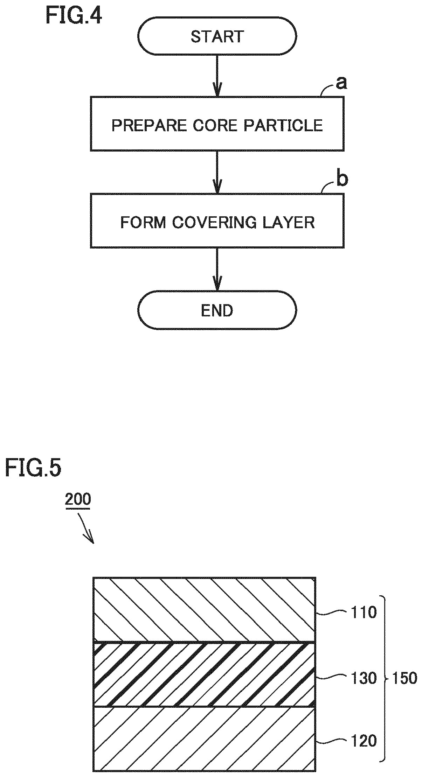

Fig. 4 is a schematic flowchart for a method of producing a composite particle according to the present embodiment.

The method of producing a composite particle according to the present embodiment (which may also be simply called "the present production method" hereinafter) includes "(a) preparing a core particle" and "(b) forming a covering layer".

«(a) Preparing Core Particle»

The present production method includes preparing core particle 10. Core particle 10 may be prepared by any method. For example, core particle 10 may be synthesized. For example, a commercially-available core particle 10 may be obtained.

<<(b) Forming Covering Layer>>

The present production method includes forming covering layer 20. Covering layer 20 is formed so as to cover at least part of the surface of core particle 10. Covering layer 20 includes first layer 21 and second layer 22. For example, by a mechanochemical method, first layer 21 and second layer 22 may be sequentially formed. For example, core particle 10 and the first SE may be mixed together under conditions where a mechanical load is applied, to form first layer 21. For example, by changing the magnitude of the mechanical load applied to core particle 10 during formation of the layers, and/or the like, the number of chips (the amount of chipping) included in second layer 22 may be adjusted. For example, the magnitude of the mechanical load may be adjusted by changing the type of the apparatus, the operational conditions of the apparatus, and/or the like. For example, the mechanical load includes shearing load, impact load, compression load, and/or the like. For example, a dry-mode particle composing machine (such as a circulation-type mechanofusion apparatus, for example) may produce relatively large shearing load and impact load. For example, a dry-mode stirring granulator, a wet-mode mixing/kneading apparatus (such as a blade-spinning-type mixing/kneading apparatus, a vessel-spinning-type mixing/kneading apparatus, and/or a kneader, for example) may produce relatively small shearing load.

<All-Solid-State Battery>

Fig. 5 is a conceptual view of an all-solid-state battery according to the present embodiment.
An all-solid-state battery 200 includes a power generation element 150. All-solid-state battery 200 may include an exterior package (not illustrated), for example. The exterior package may accommodate power generation element 150. The exterior package may have any configuration. For example, the exterior package may be a pouch made of metal foil laminated film, and/or the like, or may be a metal case and/or the like.
All-solid-state battery 200 may include a single power generation element 150, or may include a plurality of power generation elements 150. The plurality of power generation elements 150 may form a series circuit, or may form a parallel circuit, for example.
Power generation element 150 includes a positive electrode 110, a separator layer 130, and a negative electrode 120. That is, all-solid-state battery 200 includes an electrode. At least one of positive electrode 110 and negative electrode 120 includes the electrode material according to the present embodiment. That is, the electrode includes an electrode material.

<<Positive Electrode>>

Positive electrode 110 is of layered form. For example, positive electrode 110 may include a positive electrode active material layer and a positive electrode current collector. For example, the positive electrode active material layer may be formed by applying a positive electrode composite material to the surface of the positive electrode current collector. For example, the positive electrode current collector may include an aluminum foil and/or the like. For example, the positive electrode current collector may have a thickness from 5 to 50 $\mu$m.
The positive electrode active material layer may have a thickness from 10 to 200 $\mu$m, for example. The positive electrode active material layer is closely adhered to separator layer 130. The positive electrode active material layer includes a positive electrode composite material. The positive electrode composite material includes a positive electrode active material and a sulfide SE. The positive electrode composite material may include the electrode material according to the present embodiment. The positive electrode composite material may further include a fluoride SE, a conductive material, a binder, and the like. The details of the electrode material, the positive electrode active material, the fluoride SE, and the sulfide SE are as described above.
The sulfide SE may form an ion conduction path in the positive electrode active material layer. For example, the amount of the sulfide SE to be used may be from 1 to 200 parts by volume, or may be from 50 to 150 parts by volume, or may be from 50 to 100 parts by volume, relative to 100 parts by volume of the positive electrode active material. The sulfide SE mixed in the positive electrode composite material (the positive electrode active material layer) may be the same as, or different from, the second SE included in the electrode material.
The conductive material may form an electron conduction path in the positive electrode active material layer. For example, the amount of the conductive material to be used may be from 0.1 to 10 parts by mass relative to 100 parts by mass of the positive electrode active material. The conductive material may include any component. The conductive material may include, for example, at least one selected from the group consisting of carbon black (CB), vapor grown carbon fiber (VGCF), carbon nanotube (CNT), and graphene flake (GF). CB may include, for example, at least one selected from the group consisting of acetylene black (AB), Ketjenblack (registered trademark), and furnace black.

The binder is capable of binding the solid materials to each other. The amount of the binder to be used may be, for example, from 0.1 to 10 parts by mass relative to 100 parts by mass of the positive electrode active material. The binder may include any component. The binder may include, for example, at least one selected from the group consisting of polyvinylidene difluoride (PVdF), vinylidene difluoride-hexafluoropropylene copolymer (PVdF-HFP), styrene-butadiene rubber (SBR), butadiene rubber (BR), and polytetrafluoroethylene (PTFE).

<<Negative Electrode>>

Negative electrode 120 is of layered form. For example, negative electrode 120 may include a negative electrode active material layer and a negative electrode current collector. For example, the negative electrode active material layer may be formed by applying a negative electrode composite material to the surface of the negative electrode current collector. For example, the negative electrode current collector may include a copper foil, a nickel foil, and/or the like. For example, the negative electrode current collector may have a thickness from 5 to 50 $\mu$m.

The negative electrode active material layer may have a thickness from 10 to 200 $\mu$m, for example. The negative electrode active material layer is closely adhered to separator layer 130. The negative electrode active material layer includes a negative electrode composite material. The negative electrode composite material includes a negative electrode active material and a sulfide SE. The negative electrode composite material may include the electrode material according to the present embodiment. The negative electrode composite material may further include a fluoride SE, a conductive material, a binder, and the like. The details of these materials are as described above. Positive electrode 110 and negative electrode 120 may include the same type of, or different types of, sulfide SE, conductive material, and binder.

<<Separator Layer>>

Separator layer 130 may have a thickness from 1 to 100 $\mu$m, for example. Separator layer 130 may also be called "an SE layer". Separator layer 130 is interposed between positive electrode 110 and negative electrode 120. Separator layer 130 separates positive electrode 110 from negative electrode 120. Separator layer 130 includes a sulfide SE. Separator layer 130 may further include a fluoride SE and a binder. The details of these materials are as described above. Separator layer 130 and positive electrode 110 may include the same type of, or different types of, sulfide SE. Separator layer 130 and negative electrode 120 may include the same type of, or different types of, sulfide SE.

[Examples]

<Experiment 1>

In the manner described below, electrode materials, positive electrodes, and all-solid-state batteries according to Nos. 1-1 to 1-4 were produced.

«No. 1-1»

As a core particle, Li(NiCoAl)O$_2$ was prepared. Hereinafter, "Li(NiCoAl)O$_2$" may be abbreviated as "NCA".

Lithium ethoxide, pentaethoxyniobium, and super dehydrated ethanol were mixed together to prepare a precursor solution. The surface of NCA was coated with the precursor solution to form composite particles. The resulting composite particles were subjected to heat treatment to convert the precursor solution into a covering layer. The resulting covering layer consisted of a first layer. The first layer included oxide SE. The composition of the oxide SE was LiNbO$_3$.

<<No. 1-2>>

LiF, TiF$_4$, and AlF$_3$ were mixed together in a planetary ball mill to synthesize a fluoride SE. The composition of the fluoride SE was Li$_{2.7}$Ti$_{0.3}$Al$_{0.7}$F$_6$. Hereinafter, "Li$_{2.7}$Ti$_{0.3}$Al$_{0.7}$F$_6$" may be abbreviated as "LTAF".

As a particle composing machine, "Nobilta NOB-MINI (manufactured by Hosokawa Micron)" was prepared. Within the particle composing machine, 48.7 parts by mass of NCA and 1.3 parts by mass of LTAF were subjected to composing treatment to form composite particles. The conditions for operating the apparatus are as follows.

Electric power: 12 W per 1 g of material
Number of revolutions: 6000 rpm
Duration of treatment: 30 minutes

The composite particle included a covering layer. The covering layer consisted of a first layer. The first layer included LTAF.

<<No. 1-3>>

As a sulfide SE, $Li_2S-P_2S_5$ was prepared. The sulfide SE was glass ceramic. Hereinafter, "$Li_2S-P_2S_5$" may be abbreviated as "LPS".

The composite particle according to No. 1-1 was prepared. Within a particle composing machine, 71.6 parts by mass of the composite particle and 3.4 parts by mass of LPS were subjected to composing treatment. The conditions for operating the apparatus are as follows.

Electric power: 3 W per 1 g of material
Number of revolutions: 1000 rpm
Duration of treatment: 30 minutes

By the composing treatment, a covering layer that included a first layer and a second layer was formed. The first layer included $LiNbO_3$. The second layer included LPS.

<<No. 1-4>>

The composite particle according to No. 1-2 was prepared. Within a particle composing machine, 71.6 parts by mass the composite particle and 3.4 parts by mass of LPS were subjected to composing treatment. The conditions for operating the apparatus are as follows.

Electric power: 3 W per 1 g of material
Number of revolutions: 1000 rpm
Duration of treatment: 30 minutes

By the composing treatment, a covering layer that included a first layer and a second layer was formed. The first layer included LTAF. The second layer included

LPS.

<Evaluation>

A positive electrode that included the composite particle (electrode material) obtained in the above-described manner was produced. Further, a test battery (an all-solid-state battery) that included the positive electrode was produced. The test battery had the configuration as described below.

Exterior package: Al-laminated film
Composition of positive electrode active material layer: (composite particle) + LPS + AB + VGCF + binder
Positive electrode current collector: aluminum foil
Negative electrode active material: $Li_4Ti_5O_{12}$

«Initial Resistance»

SOC (State Of Charge) of the test battery was adjusted to 50%. At an hour rate of 60.2 C, the test battery was discharged for 2 seconds. From the amount of voltage drop during discharging as well as the current, initial resistance was determined. The initial resistance in Table 1 below is a relative value relative to the initial resistance in No. 1-1. The initial resistance in No. 1-1 is regarded as 100%.

"C" is a symbol denoting the hour rate (rate) of current. At an hour rate of 1 C, the rated capacity of a battery is discharged in 1 hour.

«Resistance Increment»

After the initial resistance was measured, endurance testing was carried out. More specifically, pulse cycles of charge and discharge were carried out under the conditions described below.

Testing temperature: 80°C
SOC range: 50 to 60%
Number of cycles of charge and discharge: 800

After the endurance testing, post-endurance resistance was measured in the same manner as for the initial resistance. The post-endurance resistance was divided by the initial resistance to determine the resistance increment. The resistance increment in Table 1 below is a relative value relative to the resistance increment in No. 1-1. The resistance increment in No. 1-1 is regarded as 100%.

«Electron Conductivity»

A positive electrode was prepared which had the same specifications as the positive electrode used as the test battery. By die-cutting, two disk samples were die-cut from the positive electrode. The area of each disk sample was 1 $cm^2$. These two disk samples were pressed into adhesion to each other in such a manner that their positive electrode active material layers became facing to each other, and thereby a stack was formed. The thickness of the stack and the direct-current resistance of the stack were measured. From the thickness and the direct-current resistance, electron conductivity was determined. The electron conductivity in Table 1 below is a relative value relative to the electron conductivity in No. 1-2. The electron conductivity in No. 1-2 is regarded as 1.00.

[Table 1]

Table 1

| No. | Composite particle | | | Evaluation | | |
|---|---|---|---|---|---|---|
| | Core particle | Covering layer | | Electron conductivity [-] | Initial resistance [%] | Resistance increment [%] |
| | | First layer | Second layer | | | |
| 1-1 | NCA | LiNbO$_3$ | - | 0.80 | 100 | 100 |
| 1-2 | NCA | LTAF | - | 1.00 | 110 | 64 |
| 1-3 | NCA | LiNbO$_3$ | LPS | 1.03 | 90 | 55 |
| 1-4 | NCA | LTAF | LPS | 1.29 | 100 | 42 |

As seen in Table 1 above, No. 1-4 had a markedly low resistance increment as compared to the other samples. The covering layer in No. 1-4 includes a first layer and a second layer. The first layer includes a fluoride SE (LTAF). The second layer includes a sulfide SE (LPS).

Table 1 above shows a tendency that electron conductivity is enhanced when LPS is coated as a second layer. It is presumed that the chips of the core particle (active material) or of the first layer remaining in the second layer may have inhibited the diffusion of the chips into the electrode.

<Experiment 2>

In the manner described below, electrode materials, positive electrodes, and all-solid-state batteries according to Nos. 2-1 to 2-6 were produced.

<<Nos. 2-1, 2-5>>

No. 2-1 has the same specifications as No. 1-2. No. 2-5 has the same specifications as No. 1-4.

<<Nos. 2-2 to 2-4, 2-6>>

Electrode materials, positive electrodes, and all-solid-state batteries were produced in the same manner as in No. 1-4 except that the amount of LPS to be used was changed as specified in Table 2 below.

<Evaluation>

In the same manner as in Experiment 1, resistance increment was measured. The resistance increment in Table 2 below is a relative value relative to the resistance increment in No. 1-1. The resistance increment in No. 1-1 is regarded as 100%.

In the same manner as in Experiment 1, electron conductivity was measured. The electron conductivity in Table 2 below is a relative value relative to No. 2-1 (No. 1-2). The electron conductivity in No. 2-1 is regarded as 1.00.

[Table 2]

Table 2

| No. | Composite particle | | | Evaluation | |
|---|---|---|---|---|---|
| | Core particle NCA [parts by mass] | Covering layer | | Electron conductivity [-] | Resistance increment [%] |
| | | First layer LTAF [parts by mass] | Second layer LPS [parts by mass] | | |
| 2-1 | 100 | 2.7 | 0 | 1.00 | 64 |
| 2-2 | 100 | 2.7 | 1.3 | 1.14 | 44 |
| 2-3 | 100 | 2.7 | 2.4 | 1.21 | 43 |
| 2-4 | 100 | 2.7 | 3.8 | 1.28 | 43 |
| 2-5 | 100 | 2.7 | 4.8 | 1.29 | 42 |
| 2-6 | 100 | 2.7 | 8.8 | 1.40 | 50 |

As seen in Table 2 above, it is expected that adjusting the amount of the second SE (LPS) to be used can further decrease the resistance increment, for example.

Table 2 above shows a tendency that the more increased the amount of the second SE (LPS) to be used is, the more enhanced the electron conductivity is.

**Claims**

**1.** An electrode material comprising:

a composite particle (30), wherein
the composite particle (30) includes a core particle (10) and a covering layer (20),
the covering layer (20) covers at least part of a surface of the core particle (10),
the core particle (10) includes an active material,
the covering layer (20) includes a first layer (21) and a second layer (22),
at least part of the first layer (21) is interposed between the core particle (10) and the second layer (22),
the first layer (21) includes a first solid electrolyte,
the second layer (22) includes a second solid electrolyte,
the first solid electrolyte is a fluoride, and
the second solid electrolyte is a sulfide.

**2.** The electrode material according to claim 1, wherein

the second layer (22) further includes the first solid electrolyte in addition to the second solid electrolyte, and

in the second layer (22), a volume fraction of the second solid electrolyte is more than a volume fraction of the first solid electrolyte.

3. The electrode material according to claim 1, wherein

the second layer (22) further includes the active material in addition to the second solid electrolyte, and
in the second layer (22), a volume fraction of the second solid electrolyte is more than a volume fraction of the active material,

4. The electrode material according to claim 1, wherein

the second layer (22) further includes the first solid electrolyte and the active material in addition to the second solid electrolyte, and
in the second layer (22), a volume fraction of the second solid electrolyte is more than a total volume fraction of the first solid electrolyte and the active material.

5. The electrode material according to claim 4, wherein in the second layer (22), the first solid electrolyte is adhered to the active material.

6. The electrode material according to claim 1, wherein

relative to 100 parts by mass of the active material,
the first solid electrolyte is from 1 to 10 parts by mass, and
the second solid electrolyte is from 0.1 to 20 parts by mass.

7. The electrode material according to any one of claims 1 to 6, wherein the first solid electrolyte is represented by a formula (1):

$$Li_{6-nx}M_xF_6 \dots \qquad (1)$$

where

x satisfies $0<x<2$,
M is at least one selected from the group consisting of semimetal atoms and metal atoms except Li, and,
n represents an oxidation number of M.

8. The electrode material according to claim 7, wherein M in the formula (1) includes an atom whose oxidation number is +4.

9. The electrode material according to claim 7, wherein M in the formula (1) includes an atom whose oxidation number is +3.

10. The electrode material according to claim 7, wherein M in the formula (1) includes at least one selected from the group consisting of Ca, Mg, Al, Y, Ti, and Zr.

11. An electrode comprising the electrode material according to claim 1.

12. An all-solid-state battery comprising the electrode according to claim 11.

FIG.1

FIG.2

FIG.3

FIG.4

```
        ┌──────────────┐
        │    START     │
        └──────┬───────┘
               │
               ▼              a
        ┌──────────────────────┐
        │ PREPARE CORE PARTICLE │
        └──────┬───────────────┘
               │
               ▼              b
        ┌──────────────────────┐
        │  FORM COVERING LAYER  │
        └──────┬───────────────┘
               │
               ▼
        ┌──────────────┐
        │     END      │
        └──────────────┘
```

FIG.5

200

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022119623 A
- JP 2014154407 A